# EUROPEAN PATENT SPECIFICATION

(11) **EP 0 308 213 B1**
(45) Date of publication and mention of the grant of the patent: **24.11.1993**
(21) Application number: 88308522.7
(22) Date of filing: 15.09.1988
(51) Int. Cl.: E04G 23/00

(54) **Improvements in apparatus for scabbling concrete**
Gerät zum Entfernen von Betonschichten
Appareil pour enlever des couches de béton

(30) Priority: 15.09.1987 GB 8721673
(43) Date of publication of application: 22.03.1989
(73) Proprietor: John Macdonald & Company (Pneumatic Tools) Limited, East Kilbride, Glasgow G74 5LS, Scotland (GB); Allan, David Thomson, Rutherglen, Glasgow G73 3QH, Scotland (GB)
(72) Inventor: Allan, David Thomson, Rutherglen Glasgow G73 3QH (GB)
(74) Representative: Pacitti, Pierpaolo A.M.E.

(56) References cited:
- EP-A- 0 074 234
- DE-A- 2 648 960
- DE-A- 3 109 387
- DE-U- 8 426 223
- US-A- 4 668 017

## Description

This invention relates to apparatus for scabbling concrete provided with a remote control facility.

Concrete scabbling apparatus is well known and has been produced in various different formats. When a large area is to be scabbled it has been proposed to mount the scabbling apparatus on a wheeled frame which can be moved along the surface so that different parts of the surface can be scabbled. Examples of such apparatus are described in DE-A-3109387 and DE-U-8426223. Both of these disclosures illustrate apparatus which include a wheeled carriage which allows for movement of the apparatus on the surface to be scabbled. However both types of apparatus described have limitations DE-U-8426223 has a wheeled carriage but this has no drive means meaning that the carriage must be periodically moved manually to effect a complete scabbling operation. DE-A-3109387 provides drive for the carriage but this carriage is constrained to move within guides provided by a further frame. As a consequence neither apparatus can be used to effect a scabbling operation on a complete surface area as a single operation under remote control. This is a particular disadvantage when the area to be scabbled is contaminated or otherwise hazardous and thus practically inaccessible.

It is an object of the present invention to provide apparatus which overcomes this deficiency in the prior art.

According to the present invention there is provided apparatus for scabbling concrete comprising a main frame, an inner frame mounted on the main frame and carrying a plurality of primary scabbling units, and motor means providing rotational drive for the scabbling units through a first drive arrangement and translational movement of the apparatus through a second drive arrangement, which provides drive to wheel means on the main frame to effect translational movement of the apparatus through clutch means characterised in that the apparatus is provided with means for removable attachment to a support assembly for supporting the apparatus for operating on walls or ceilings, and wherein means are provided for removable attachment of an additional scabbling head to said support assembly whereby scabbling of areas inaccessible by the primary scabbling units may be performed and wherein means are provided for remote control of the apparatus.

Preferably, a pair of said second drive arrangements are provided each independently providing drive to a respective ground engaging wheel means to effect steerable translational movement of the apparatus.

Preferably also, the scabbling units are resiliently mounted in an inner frame which is rotatably mounted within the main frame.

Preferably also, the inner frame is circular in plan and the scabbling heads of the scabbling units are located at different radii within the inner frame.

Preferably also, said motor means includes an air motor.

An embodiment of the present invention will now be described by way of example with reference to the accompanying drawings, in which:
Fig. 1 is a side elevational view of one embodiment of a remote controlled apparatus for scabbling concrete;
Fig. 2 is a top plan view of the apparatus of Fig. 1;
Fig. 3 is an end elevation of a support mast for remote control apparatus for scabbling concrete;
Fig. 4 is a front view of the support mast illustrating apparatus for scabbling concrete in an alternative position;
Fig. 5 is an end elevation of a support mast illustrating a further alternative layout of apparatus for scabbling concrete; and
Fig. 6 is a schematic diagram illustrating the area of coverage of the apparatus for scabbling concrete.

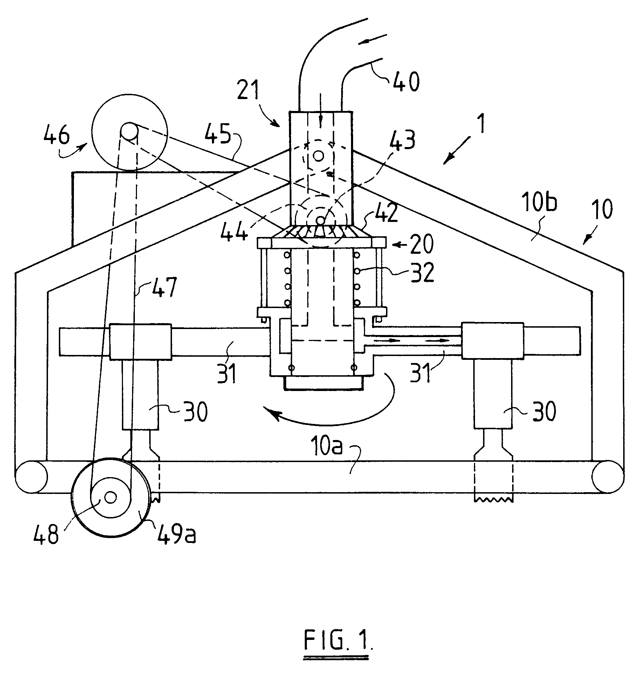

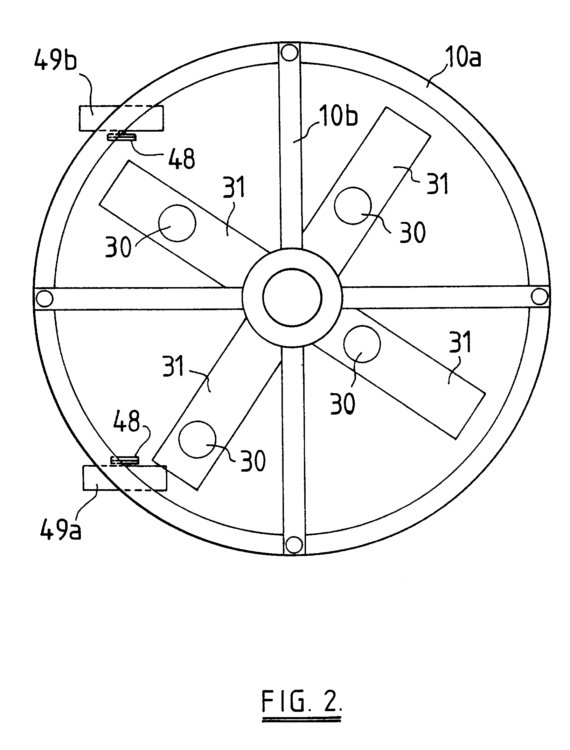

Referring to Figs. 1 and 2 of the drawings remote controlled apparatus for scabbling concrete 1 comprises a main frame 10 made up of a chassis portion 10a and an upper portion 10b.

The upper portion 10b of the frame 10 rotatably supports an inner frame 20 which may be rotated within the main frame 10 by means of an air motor 21. A plurality of scabbling units 30, in this case four, are supported in cylinder blocks in the form of radially extending arms 31 carried by the inner frame 20. The arms 31 are mounted resiliently by virtue of a coil spring 32 and the scabbling units 30 are positioned at different radii such that when the inner frame is rotated the scabbling heads of each of the units 30 overlap and the complete surface is scabbled.

A supply of compressed air for the air motor 21 and for the scabbling units 30 is obtained via a supply pipe 40 and fed to the respective units through ducting within the frame 20. Thus, rotation of the inner frame is achieved by actuation of the air motor 21.

To treat a complete surface, it is necessary to cause the main frame to effect translational movement. To the end, the inner frame 20 is provided with a crown wheel 42 which engages a pinion 43 for rotational movement of the inner frame 20 and to which a belt pulley 44 wheel is attached. By means of a drive belt 45 or the like, rotation of the pulley 44 is transmitted to the input of a clutch unit 46. The output of the clutch unit 46 is drivingly connected through a drive belt 47 to a belt pulley 48 in turn connected to a ground wheel 49a.

To permit steering of the apparatus, two such drive systems may be provided, one associated with the ground wheel 49a as described above, and the other associated with a second ground wheel 49b. By selective operation of the respective clutch unit, the apparatus can be caused to cover, as desired, the surface to be scabbled.

The controls for the air supply and for the clutch unit are preferably remote from the apparatus thus facilitating the scabbling of large surface areas whilst minimising operator fatigue.

Modifications and improvements may be incorporated without departing from the scope of the invention, for example, each of the arms 31 may carry a plurality of radially spaced scabbling units.

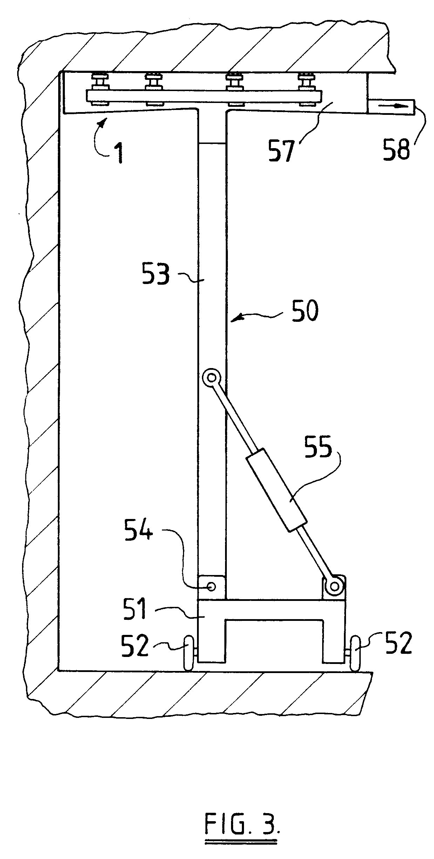

Referring now to Fig. 3-5 a support mast 50 is illustrated which allows the apparatus to be adapted to operate on walls and ceilings.

The support mast 50 comprises a chassis portion 51, provided with ground wheels 52, and a support member 53. The support member 53 is pivotally mounted on the chassis portion 51 at 54 and a fluid cylinder 55 extending between the chassis portion 51 and the support member is operable to alter the angle of the support member 53. In the layout illustrated in Fig. 3 the apparatus for scabbling concrete 1 is positioned horizontally at the top of the support member 53 in an arrangement suitable for operating on ceilings.

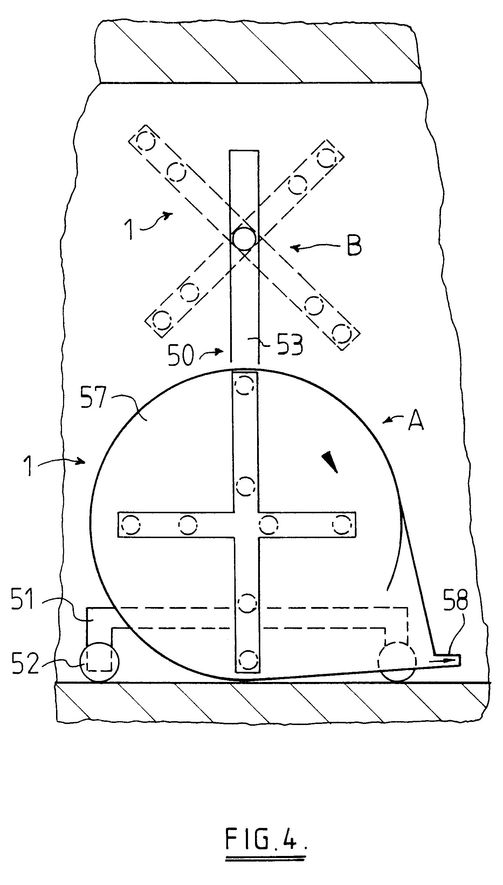

In Fig. 4 the layout illustrated is set up for operating on walls with the scabbling apparatus 1 illustrated at a low level at A and shown at the maximum height in dotted form at B.

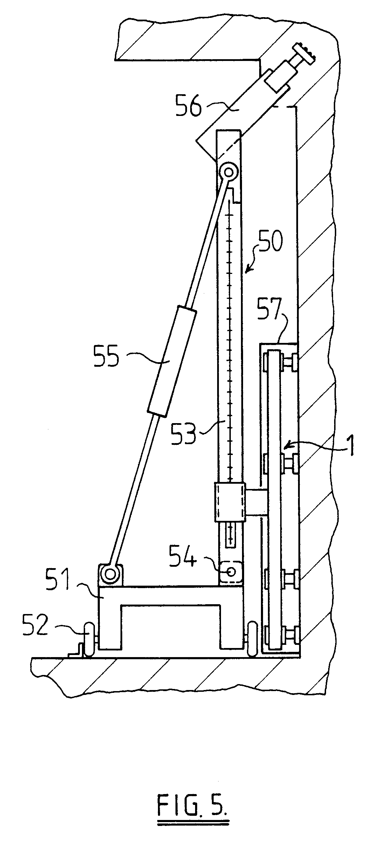

An alternative layout is illustrated in Fig. 5. A longer fluid cylinder 55 is illustrated and the scabbling apparatus 1 is mounted on the support member 53 for vertical sliding movement. In this embodiment an additional angular cutting head 56 is mounted at the top of the support member 53. The addition of this cutting head 56 allows the apparatus to cut a groove in the corner between a ceiling and wall or ceiling and floor an area which the main scabbling apparatus 1 cannot easily reach.

The overall assembly is designed to be remotely operated with its various operations controlled by fluid driven motors. The four ground wheels 52 are also remotely steerable using linear or rotary fluid powered actuators, (not illustrated). A guard 57 is incorporated around the scabbling apparatus 1 and an outlet 58 allows connection to a dust extraction or collection system.

The ability of the apparatus to operate on walls, ceilings, or floors with a remote control facility makes it particularly useful for use in hazardous areas such as for example, concrete structures as might be found in a nuclear power station being decommissioned. In such environments the concrete structure may be suffering from nuclear contamination to a depth of several inches and the apparatus described allows removal of the contaminated layer. The apparatus can remove one or more layers as necessary to ensure that the concrete is penetrated to a depth greater than the contamination.

As described in relation to Fig. 1 and 2 the cutting heads or scabbling units 30 can be set at various radii to give complete coverage when the arms 31 rotate. Alternatively the scabbling units 30 may be set a shown in dotted form at B in Fig. 4 to cut an annular groove on the surface when rotated and so cut a strip along the surface when the complete assembly is propelled forward or backwards.

In the embodiment illustrated in Fig. 5 a fluid powered actuator and chain and chain wheels are provided to raise and lower the cutting arms 31 in order to increase the coverage of the scabbling units 30 at the end of each strip cut by raising or lowering the cutting arms whilst cutting.

The benefit of having rotating cutting arms and cutting heads is that a larger area may be covered for the same number of cutting heads as compared to a conventional cylinder block. The overall weight of the machine can thus be reduced allowing for easier man-handling of the machine.

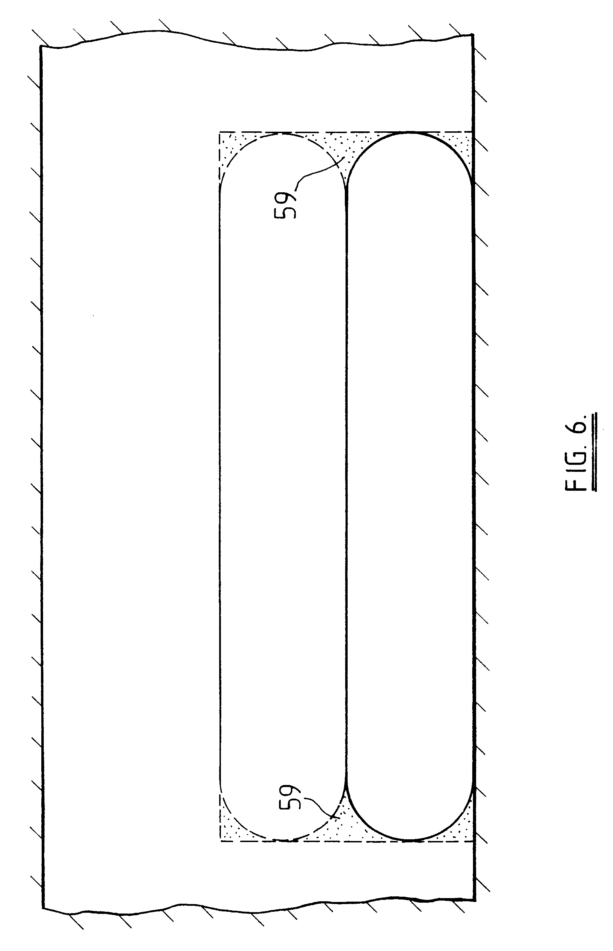

As can be seen in Fig. 6 the rotating action of the apparatus leaves areas 59 at the end of each strip uncut. This can be overcome by fitting additional cutting heads in a conventional block to the machine.

## Claims

1. Apparatus for scabbling concrete comprising a main frame (10), an inner frame (20) mounted on the main frame (10) and carrying a plurality of primary scabbling units (30), and motor means (21) providing rotational drive for the scabbling units (30) through a first drive arrangement (42, 43) and translational movement of the apparatus through a second drive arrangement (44, 45, 52), which provides drive to wheel means (49a, 49b) on the main frame to effect translational movement of the apparatus through clutch means (46) characterised in that the apparatus is provided with means for removable attachment to a support assembly (50) for supporting the apparatus for operating on walls or ceilings, and wherein means are provided for removable attachment of an additional scabbling head (56) to said support assembly whereby scabbling of areas inaccessible by the primary scabbling units may be performed and wherein means are provided for remote control of the apparatus.

2. Apparatus as claimed in Claim 1, wherein a pair of said second drive arrangements are provided each independently providing drive to a respective surface engaging wheel means to effect steerable translational movement of the apparatus.

3. Apparatus as claimed in Claim 1 or 2, wherein the scabbling units (30) are resiliently mounted in the inner frame (20) which is rotatably mounted within the main frame (10).

4. Apparatus as claimed in Claim 1, 2 or 3, wherein the inner frame (20) is circular in plan and the scabbling heads of the scabbling units (30) are located at different radii within the inner frame (20).

5. Apparatus as claimed in any one of the preceding Claims, wherein the motor means (21) includes an air motor.

6. Apparatus as claimed in any one of the preceding claims wherein the support assembly (50) comprises a support member (53) pivotally mounted on a chassis (51) and provided with a fluid cylinder (55) for adjustment of the angle of the support member (53).

7. Apparatus as claimed in any one of the preceding Claims, wherein guard means (57) and dust extraction means are provided for the scabbling units (30).

## Patentansprüche

1. Gerät zum Bearbeiten von Beton mit dem Spitzhammer, bestehend aus einem Hauptrahmen (10), einem Innenrahmen (20), der an dem Hauptrahmen (10) montiert ist und eine Vielzahl primärer Spitzhammer-Bearbeitungseinheiten (30) trägt, und einer Motoreinrichtung (21), welche einen Drehantrieb für die Spitzhammer-Bearbeitungseinheiten (30) durch eine erste Antriebsanordnung (42,43) und eine Translationsbewegung des Gerätes durch eine zweite Antriebsanordnung (44,45,52) liefert, die einen Antrieb an eine Radeinrichtung (49a,49b) an dem Hauptrahmen liefert, um die Translationsbewegung des Gerätes durch eine Kupplungseinrichtung (46) zu bewirken, dadurch gekennzeichnet, daß das Gerät mit einer Einrichtung für eine entfernbare Befestigung an einer Abstützbaugruppe (50) versehen ist für eine Abstützung des Gerätes zum Betrieb an Wänden oder Decken, und bei welchem eine Einrichtung für eine entfernbare Befestigung eines zusätzlichen Spitzhammer-Bearbeitungskopfes (56) an der Abstützbaugruppe vorgesehen ist, wodurch eine Bearbeitung mit dem Spitzhammer von Flächen, die durch die primären Spitzhammer-Bearbeitungseinheiten nicht zugänglich sind, durchgeführt werden kann, und bei welchem eine Einrichtung für eine Fernsteuerung des Gerätes vorgesehen ist.

2. Gerät nach Anspruch 1, bei welchem ein Paar der zweiten Antriebsanordnungen vorgesehen ist, von denen jede separat einen Antrieb an eine betreffende Radeinrichtung im Eingriff mit einer Oberfläche liefert, um eine steuerbare Translationsbewegung des Gerätes zu bewirken.

3. Gerät nach Anspruch 1 oder 2, bei welchem die Spitzhammer-Bearbeitungseinheiten (30) elastisch-nachgiebig in dem Innenrahmen (20) montiert sind, der innerhalb des Hauptrahmens (10) drehbar montiert ist.

4. Gerät nach Anspruch 1, 2 oder 3, bei welchem der Innenrahmen (20) kreisförmig in der Draufsicht ist und die Spitzhammer-Bearbeitungsköpfe der Spitzhammer-Bearbeitungseinheiten (30) an verschiedenen Radien innerhalb des Innenrahmens (20) angeordnet sind.

5. Gerät nach einem der vorhergehenden Ansprüche, bei welchem die Motoreinrichtung (21) einen Luftmotor aufweist.

6. Gerät nach einem der vorhergehenden Ansprüche, bei welchem die Abstützbaugruppe (50) ein Abstützglied (53) aufweist, welches an einem Chassis (51) schwenkbar montiert und mit einem Fluidzylinder (55) versehen ist für eine Einstellung des Winkels des Abstützgliedes (53).

7. Gerät nach einem der vorhergehenden Ansprüche, bei welchem eine Schutzeinrichtung (57) und eine Staub-Extraktionseinrichtung für die Spitzhammer-Bearbeitungseinheiten (30) vorgesehen sind.

## Revendications

1. Appareil pour hacher le béton comprenant un cadre principal (10), un cadre intérieur (20) monté sur le cadre principal (10) et portant une pluralité d'unités de hachage primaire (30), et des moyens moteur (21) produisant l'entraînement en rotation des unités de hachage (30) par l'intermédiaire d'un premier ensemble d'entraînement (42, 43) et le mouvement en translation de l'appareil par l'intermédiaire d'un second ensemble d'entraînement (44, 45, 52), qui produit l'entraînement de moyens de roues (49a, 49b) sur le cadre principal pour assurer le mouvement en translation de l'appareil par l'intermédiaire d'un embrayage (46), caractérisé en ce que l'appareil comprend des moyens pour sa fixation amovible à un ensemble support (50) pour supporter l'appareil pour le fonctionnement sur des murs ou des plafonds, et dans lequel des moyens sont prévus pour la fixation amovible d'une tête de hachage supplémentaire (56) sur ledit ensemble support de façon que puisse être assuré le hachage de zones qui sont inaccessibles par les unités de hachage primaire, et dans lequel des moyens sont prévus pour la commande à distance de l'appareil.

2. Appareil selon la revendication 1, dans lequel sont prévus deux seconds ensembles d'entraînement, produisant chacun indépendamment l'entraînement d'un moyen de roue en appui sur une surface respective pour assurer un mouvement de translation orientale de l'appareil.

3. Appareil selon l'une des revendications 1 ou 2, dans lequel les unités de hachage (30) sont montées élastiquement sur le cadre intérieur (20) qui est monté à rotation à l'intérieur du cadre principal (10).

4. Appareil selon les revendications 1, 2 ou 3, dans lequel le cadre intérieur (20) est circulaire en plan et les têtes de hachage des unités de hachage (30) sont placées à des rayons différents à l'intérieur du cadre intérieur (20).

5. Appareil selon l'une quelconque des revendications précédentes, dans lequel les moyens moteurs (21) comprennent un moteur à air.

6. Appareil selon l'une quelconque des revendications précédentes, dans lequel l'ensemble support (50) comprend un membre support (53) monté à pivotement sur un châssis (51) et muni d'un vérin à fluide (55) pour le réglage de l'angle du membre support (53).

7. Appareil selon l'une quelconque des revendications précédentes, dans lequel des moyens de protection (57) et des moyens d'extraction de poussière sont prévus pour les unités de hachage (30).
